Europäisches Patentamt

European Patent Office

Office européen des brevets

(19)

(11) Numéro de publication : **0 370 839 B1**

## (12) FASCICULE DE BREVET EUROPEEN

(45) Date de publication du fascicule du brevet :
**07.01.93 Bulletin 93/01**

(51) Int. Cl.⁵ : **G01D 5/20,** G01D 5/12, G01P 3/481

(21) Numéro de dépôt : **89402771.3**

(22) Date de dépôt : **09.10.89**

(54) Dispositif pour la mesure de la position angulaire et du déplacement linéaire de deux pièces l'une par rapport à l'autre.

(30) Priorité : **10.10.88 FR 8813272**
**04.08.89 FR 8910533**

(43) Date de publication de la demande :
**30.05.90 Bulletin 90/22**

(45) Mention de la délivrance du brevet :
**07.01.93 Bulletin 93/01**

(84) Etats contractants désignés :
**BE CH DE ES FR GB IT LI NL SE**

(56) Documents cités :
**EP-A- 0 287 949**
**DE-A- 1 588 220**
**DE-A- 2 407 240**
**US-A- 3 786 354**

(56) Documents cités :
**IBM TECHNICAL DISCLOSURE BULLETIN,
vol. 23, no. 8, janvier 1981, pages 3641-3643,
New York, US; HELSINKI: "Belt edgedetector"**

(73) Titulaire : **GEC ALSTHOM SA**
**38, avenue Kléber**
**F-75116 Paris (FR)**

(72) Inventeur : **Maestre, Jean-François**
**2 A, Allée Paul Valéry**
**F-21000 Dijon (FR)**
Inventeur : **Regis, André**
**2, Allée Louis Pergaud**
**F-21240 Talant (FR)**

(74) Mandataire : **Weinmiller, Jürgen et al**
**Lennéstrasse 9 Postfach 24**
**W-8133 Feldafing (DE)**

## Description

La présente invention est relative à un dispositif pour la mesure de la position angulaire et du déplacement linéaire de deux pièces l'une par rapport à l'autre et en particulier pour la mesure de la position angulaire d'un rotor par rapport à un stator.

L'invention trouve une application très intéressante dans le domaine de la mesure de position angulaire en particulier dans les machines électriques. C'est cette dernière application qui sera donnée à titre d'exemple dans la suite, sans limiter la protection conférée par la présente demande de brevet. En effet l'invention peut être appliquée à la mesure du déplacement linéaire d'une première pièce par rapport à une seconde pièce.

La connaissance de l'angle de rotation du rotor est nécessaire pour le pilotage d'une machine électrique en couple, vitesse et position.

Jusqu'à ce jour la mesure de cet angle est obtenue par plusieurs types de technique.

Un premier moyen de mesure de la position d'un axe est l'utilisation d'un capteur inductif de type résolver, qui fournit deux signaux respectivement proportionnels aux sinus et au cosinus de l'angle recherché.

De tels capteurs conviennent bien pour des moteurs à faible nombre de pôles, mais deviennent volumineux et onéreux pour des applications à grand nombre de pôles. Si l'on désire une bonne précision de la mesure (quelques minutes d'angle), il est nécessaire d'utiliser un résolver multipolaire, donc coûteux.

Par ailleurs, en fonctionnement à vitesse lente, exigée dans certaines applications de robotique ou pour l'entraînement de certaines machines-outils, le traitement du signal du résolver n'assure pas une parfaite tranquillité de marche.

Un but de la présente invention est de réaliser un capteur de position permettant un très bon fonctionnement en basse vitesse, une mesure précise de la position et un prix de revient réduit.

D'autres techniques sont, à ce jour utilisées :
- un alternateur tachymétrique donnant un signal vitesse mais pas de signal position,
- un capteur optique mesurant la position incrémentale et dont le signal dérivé ne conduit pas à une bonne maîtrise des très basses vitesses,
- les deux dernières techniques citées ont, de plus, l'inconvénient d'introduire des éléments thermiquement sensibles dans l'habillage du moteur, par exemple sondes de Hall, capteurs opto-électroniques, composants électroniques, etc...

Un but de l'invention est de réaliser un capteur fournissant des signaux transportables à distance sans nécessiter de disposer de circuits électroniques sur la machine elle-même.

L'art antérieur le plus proche dans ce domaine est illustré par le document DE-A- 2 407 240.

Le document DE-A-2 407 240 concerne un émetteur d'impulsions pour le codage de la position angulaire et de la vitesse de rotation d'un arbre tournant.

Il utilise une roue dentée, calée sur l'arbre dont on veut détecter la vitesse, et deux circuits magnétiques séparés par les dents de la roue. Les dents de la roue sont en matériau ferromagnétique.

L'un des circuits magnétiques possède une bobine émettrice alimentée en courant alternatif à fréquence constante.

L'autre circuit magnétique possède une bobine réceptrice qui délivre une tension modulée en fonction de la vitesse de rotation de l'arbre.

On diminue encore l'influence de l'entrefer entre les circuits magnétiques et la dent en utilisant deux bobines réceptrices, décalées d'un nombre impair de demi-pas, et dont les signaux sont soustraits.

Le dispositif sert par exemple à caler un rotor dans une position donnée en comptant des impulsions, ou à mesurer la vitesse de rotation d'un arbre, en comptant le nombre d'impulsions pendant un intervalle de temps donné.

Le dispositif du document précité ne fournit pas un résultat assez précis dans un environnement industriel rempli de parasites.

L'invention part d'un état de la technique tel que celui du document DE-A-1 588 220. Ce document décrit un dispositif pour connaître une position donnée d'un élément mobile et s'applique à la manoeuvre d'un moteur pas à pas.

On y utilise un disque à quatre dents en matériau conducteur et trois paires de noyaux bobinés, dont deux paires sont séparées par le disque lorsque le troisième est dans l'espace entre deux dents.

Une impulsion envoyée sur la bobine primaire d'une paire se retrouve dans la bobine secondaire, atténuée si une dent se trouve devant la paire, non atténuée si la paire est en face d'un intervalle entre deux dents.

L'impulsion secondaire commande un multivibrateur qui pilote un transistor d'alimentation des bobines du moteur pas à pas.

Un but de l'invention est d'utiliser l'enseignement de ce document, applicable à un moteur pas à pas pour le pilotage d'une machine électrique pour toutes les gammes de vitesse et de couple. Ce but est atteint par le dispositif tel qu'il est défini dans l'une des revendications 1 et 3.

En ce qui concerne des caractéristiques de certaines mises en oeuvre préférées de l'invention, référence est faite aux revendications secondaires.

L'invention est expliquée en détail par la description de divers modes de réalisation en référence au dessin annexé dans lequel :
- la figure 1 est une vue schématique partielle en coupe axiale d'un moteur muni d'un capteur selon l'invention
- la figure 2 est une vue agrandie d'une partie "A" agrandie de la figure 1

- la figure 3 est une vue en perspective d'un capteur élémentaire équipant le dispositif de l'invention

- la figure 4 est une vue développée partielle de l'élément muni de dents coopérant avec les capteurs

- la figure 5 est un schéma montrant la disposition des bobines du capteur pour un moteur triphasé à 39 paires de pôles

- la figure 6 est un schéma explicitant le mode de connexion des bobines émettrices et réceptrices du capteur de l'invention.

- les figures 7A et 7B sont des schémas montrant la forme des signaux recueillis aux bornes des bobines ou groupes de bobines réceptrices.

- la figure 8 représente schématiquement un capteur selon une variante.

- la figure 9 est un schéma représentant un capteur selon une autre variante.

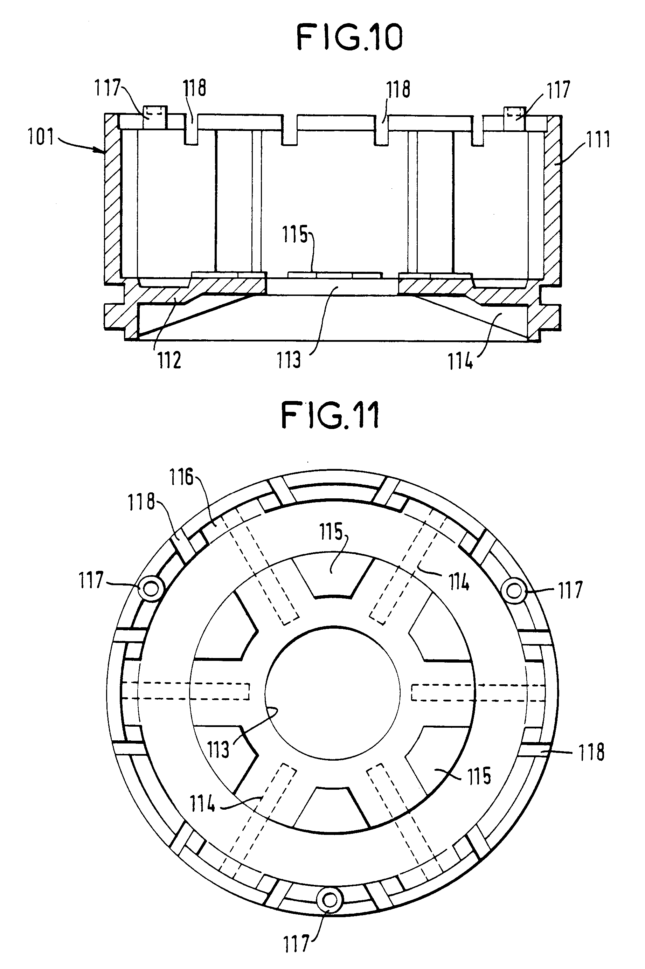

- la figure 10 est une vue en élévation en coupe axiale du corps du dispositif de mesure de déplacement angulaire.

- la figure 11 est une vue de dessus du même corps.

- la figure 12 est une vue en perspective de l'un des circuits magnétiques.

- la figure 13 est une vue en perspective du même circuit magnétique muni de ses bobinages.

- la figure 14 est une vue en plan du disque équipant le dispositif de l'invention.

- la figure 15 est une vue du circuit imprimé du dispositif.

- la figure 16 est une vue en élévation en coupe axiale du dispositif de mesure complet.

L'exemple décrit en détail ci-après concerne un dispositif de mesure de l'angle de rotation du rotor d'une machine électrique.

Bien entendu, l'invention s'applique à la mesure de la rotation de toute pièce tournante, la machine électrique n'étant qu'un cas particulier. La machine choisie est une machine synchrone triphasée à 39 paires de pôles. Bien entendu l'invention s'applique à toute machine à n phases et p paires de pôles.

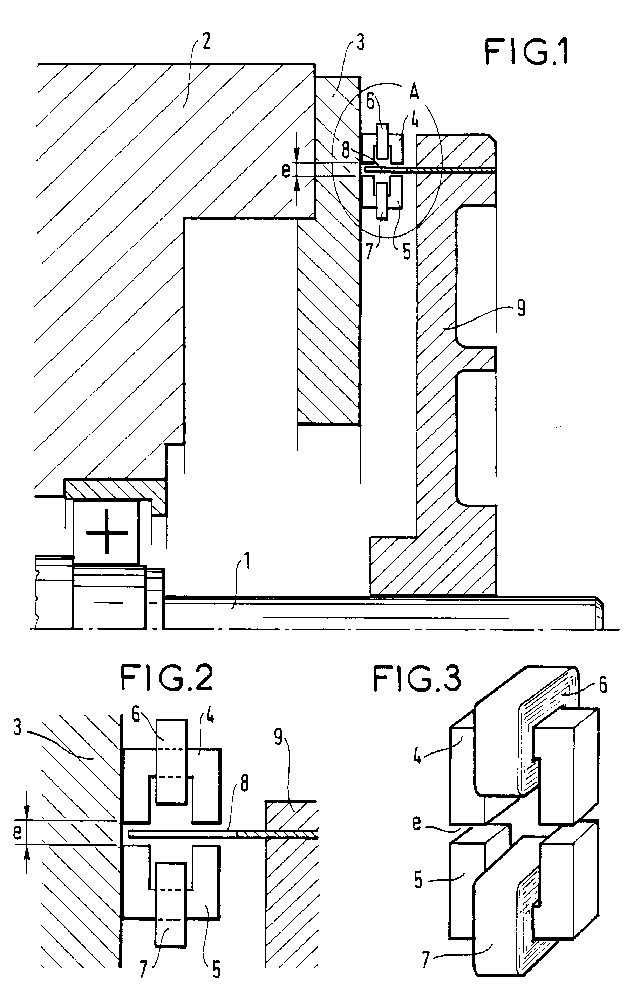

La machine décrite à titre d'exemple est très partiellement représentée dans la figure 1 où l'on distingue l'arbre rotorique 1 et le stator 2 terminée par une plaque frontale 3. Sur cette plaque sont fixés un certains nombre de capteurs élémentaires comprenant chacun deux circuits magnétiques tels que 4 et 5, munis chacun d'un bobinage, ces bobinages étant référencés respectivement 6 et 7. Les deux circuits sont séparés par un entrefer e dans lequel peut tourner un élément solidaire du rotor réalisé selon une couronne 8 dentelée fixée à un plateau 9 solidaire de l'arbre 1.

Comme on le voit dans les figures 2 et 3, chaque circuit magnétique, réalisé de préférence en matériau ferro-magnétique à faible perte, à la forme d'un U ; les branches des U sont en vis-à-vis deux à deux et définissent un entrefer dans lequel passe la couronne dentée décrite plus loin. Chaque circuit magnétique porte une bobine : le circuit 4 comprend une bobine émettrice 6 et le circuit 5 comprend une bobine réceptrice 7.

La couronne 8 est représentée partiellement et en vue développée dans la figure 3. Elle est réalisée en matériau amagnétique conducteur.

Le nombre de dents (ou crans) 8A est égal au produit du nombre des phases au nombre de paires de pôles, soit np. La longueur des dents est choisie pour permettre d'intercepter le flux magnétique passant d'un circuit magnétique à l'autre.

Le dispositif de l'invention possède 2n capteurs, si n est le nombre de phases.

Dans l'exemple décrit, le dispositif possède donc 6 capteurs à raison de deux par phase.

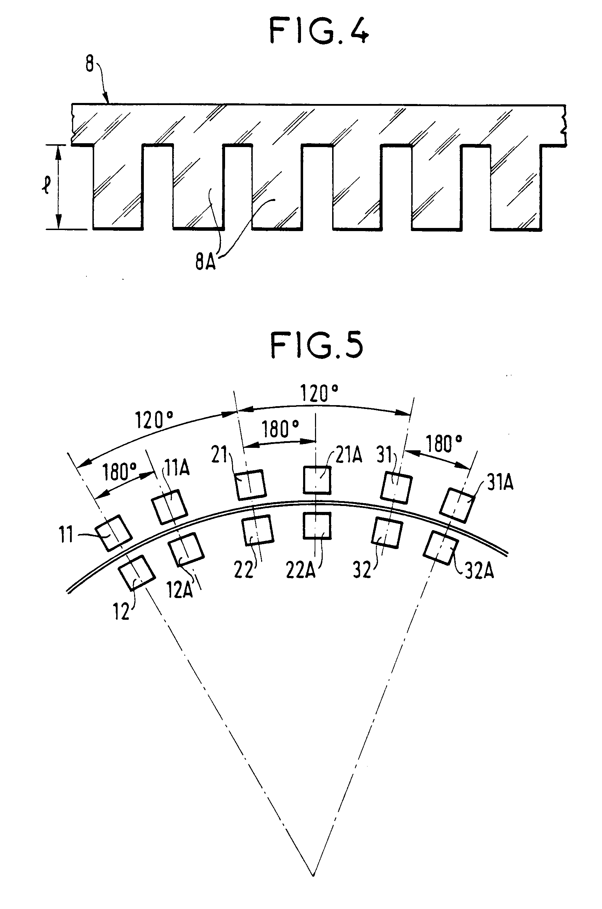

Pour la phase "un" les capteurs sont, dans la figure 5, représentés respectivement par les carrés 11, 12 et 11A, 12A.

Le carré 11 figure la bobine émettrice du premier capteur, le carré 12 la bobine réceptrice du même capteur ; le carré 11A représente la bobine émettrice du deuxième capteur de la phase "un" et le carré 12A la bobine réceptrice du même capteur.

Les deux capteurs d'une même phase sont décalés de 180 degrés électriques soit $\frac{360}{2p}$ degrés d'angle (dans l'exemple choisi, cela représente en unités d'angle 13 degrés, 50 minutes et 46 secondes).

Pour la phase "deux", on a de même deux capteurs ayant les bobines respectives 21, 22 et 21A, 22A, décalés de 180° degrés électriques l'un par rapport à l'autre.

Le décalage angulaire entre les capteurs respectifs des phases "un" et "deux" est de 120° degrés électriques. Pour éviter le chevauchement éventuel des capteurs des phases l'un" et "deux" ceux-ci peuvent être décalés d'un angle complémentaire de 360° électrique soit $k\frac{360}{p}$ degrés d'angle, k étant un nombre entier arbitraire.

On choisit k pour que les capteurs de la phase "deux" ne chevauchent pas ceux de la phase "un" et n'en soient pas trop éloignés.

En prenant k = 20, on obtient dans l'exemple choisi, un angle égal à : $20 \times \frac{360}{78} = 30$ degrés, 50 minutes, 10 secondes.

Les bobines 31, 32 et 31A, 32A de la phase "trois" sont de même espacés de 180° électriques l'une de l'autre et décalés de 120° électriques des bobines de la phase "deux".

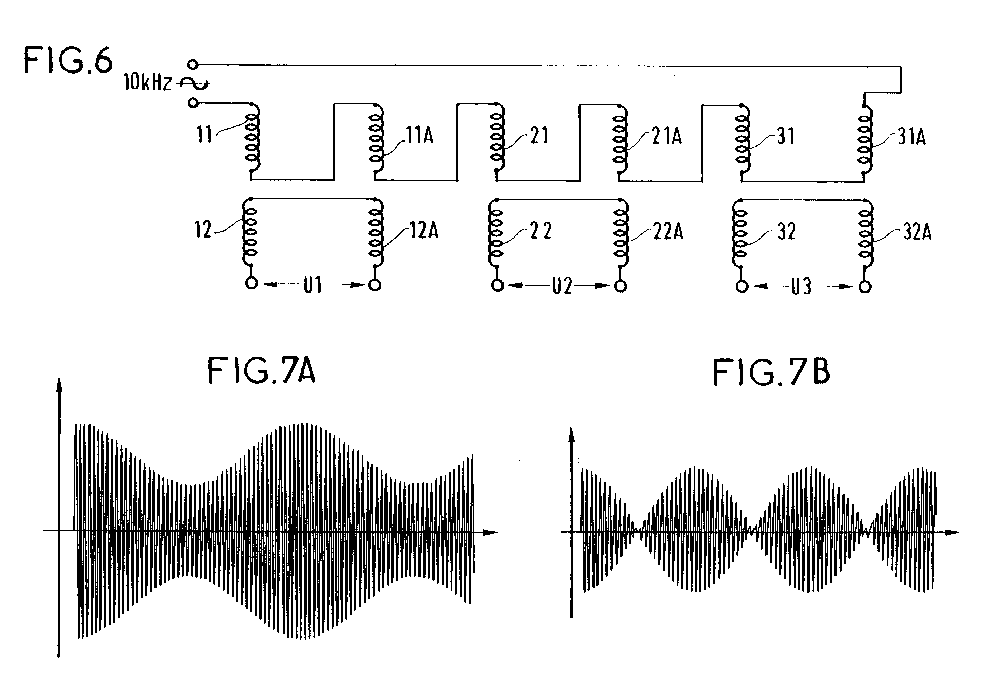

Les bobines émettrices 11, 11A, 21, 21A 31, 31A sont connectées en série comme indiqué dans la figure 6, et alimentées par une source alternative de fréquence comprise entre 2 et 15 kHz, préférentiellement 10 KHz.

Les deux bobines réceptrices des capteurs d'une même phase sont connectées en série et on recueille des tensions de sorties U1, U2 et U3.

Le fonctionnement du dispositif est le suivant : chaque capteur se comporte comme un transformateur à rapport de transformation variable selon que l'entrefer entre les deux circuits magnétiques "voit" de l'air ou une dent de la couronne.

Pour une même phase, les signaux induits dans les deux bobines réceptrices associées sont en opposition de phase, de telle sorte que le signal aux bornes de l'ensemble constitué des deux bobines en série est débarrassé de toute composante continue ainsi que des harmoniques pairs.

La figure 7A montre la forme du signal aux bornes d'une bobine réceptrice d'un capteur ; la figure 7B montre la forme du signal, (U1, U2, U3) aux bornes du circuit formées des deux bobines réceptrices d'une phase, reliées en série. L'enveloppe du signal est représentatif de l'angle du rotor par rapport à une référence fixe.

Le dispositif fournit aussi trois signaux représentatifs de l'angle de rotation de la machine à 120 degrés l'un de l'autre, à partir desquels un circuit de traitement classique élabore les ordres nécessaires au fonctionnement de la machine.

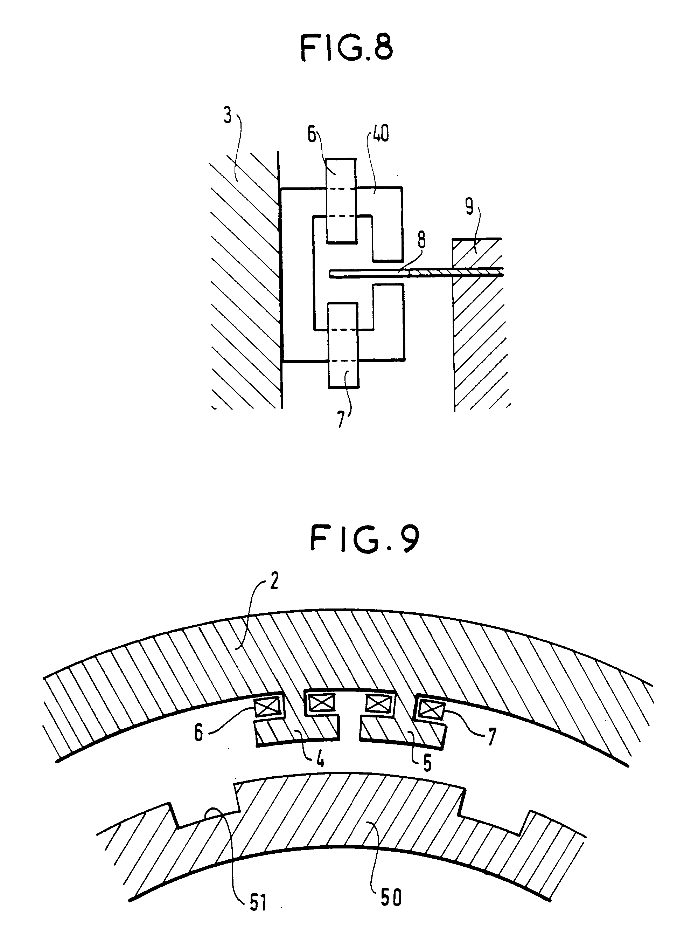

La figure 8 représente une variante de réalisation du capteur. Les éléments communs aux figures 2 et 8 on reçu les mêmes numéros de référence.

Les circuits magnétiques en U de la figure 2 sont maintenant remplacés par un circuit magnétique 40 unique en C portant les bobines émettrice 6 et réceptrice 7.

Le dispositif de l'invention est de fonctionnement sûr à toutes les vitesses, par sa rusticité, il est de mise en oeuvre peu onéreuse ; il occupe un faible volume. Il ne nécessite aucune électronique sur la machine, puisque le signal peut être transporté sans amplification sur plusieurs dizaines de mètres.

La consommation est très faible, de l'ordre de quelques mW.

La résolution de l'appareil est très grande, de l'ordre de plusieurs centaines de milliers de points par tour.

Le dispositif de l'invention est peu sensible à certains paramètres tel que le faux rond mécanique, en raison du caractère amagnétique de la cloche.

Il est peu sensible à la température.

L'invention s'applique à toute taille de machine quels que soient la polarité et le nombre de phases. Elle s'applique également à la mesure de tout angle de rotation d'un rotor par rapport à un stator.

L'invention s'applique à la mesure du déplacement linéaire d'une première pièce par rapport à une seconde pièce.

On utilise 2n capteurs du type décrit plus haut, et solidaires de la première pièce. Ils sont disposés de manière que les entrefers des capteurs soient alignés groupés deux par deux ; deux capteurs d'un même groupe sont distants d'une longueur $\frac{L}{2m}$, où L est une longueur arbitraire et m un nombre entier.

Deux groupes voisins sont espacés d'une longueur $k\frac{L}{m}$, où k est un coefficient dépendant du nombre de phase du capteur.

Comme précédemment, les bobines émettrices sont mises en série et alimentés par une tension alternative comprise entre 2 et 15 kHz.

Un élément solidaire de la seconde pièce, comporte m dents alignées assujetties à se déplacer dans l'entrefer des capteurs.

Les bobines réceptrices sont connectées en série dans un même groupe.

L'enveloppe des signaux aux bornes des ensembles de bobines réceptrices représente à un déphasage près l'image de la mesure du déplacement relatif des deux pièces.

Dans le dispositif qui vient d'être décrit, le disque 8 est perpendiculaire aux lignes de champ reliant l'émetteur au récepteur.

Dans une variante, représentée dans la figure 9, le disque est remplacé par une pièce métallique 50 discale ou de préférence annulaire, coaxiale à l'arbre de la machine, solidaire de ce dernier et munie de m rainures ou encoches 51 pour provoquer des variations d'induction dans le circuit magnétique 4, 5. Les rainures 51 sont droites et parallèles à l'axe de la machine, ou inclinées de manière appropriée pour obtenir un signal, dans le bobinage récepteur, aussi proche que possible d'une sinusoïde.

On décrit maintenant un mode préféré de mise en oeuvre de l'invention dans l'application à la mesure des déplacements angulaires.

Un objectif visé est de réaliser un appareil de construction simple et robuste, dont le prix de revient est notablement inférieur à celui des appareils de fonction similaire, tels que les résolveurs et des dynamos tachymétriques.

Un autre objectif est de réaliser un appareil pouvant être positionné rapidement et avec une grande précision sur l'arbre du moteur piloté par l'appareil.

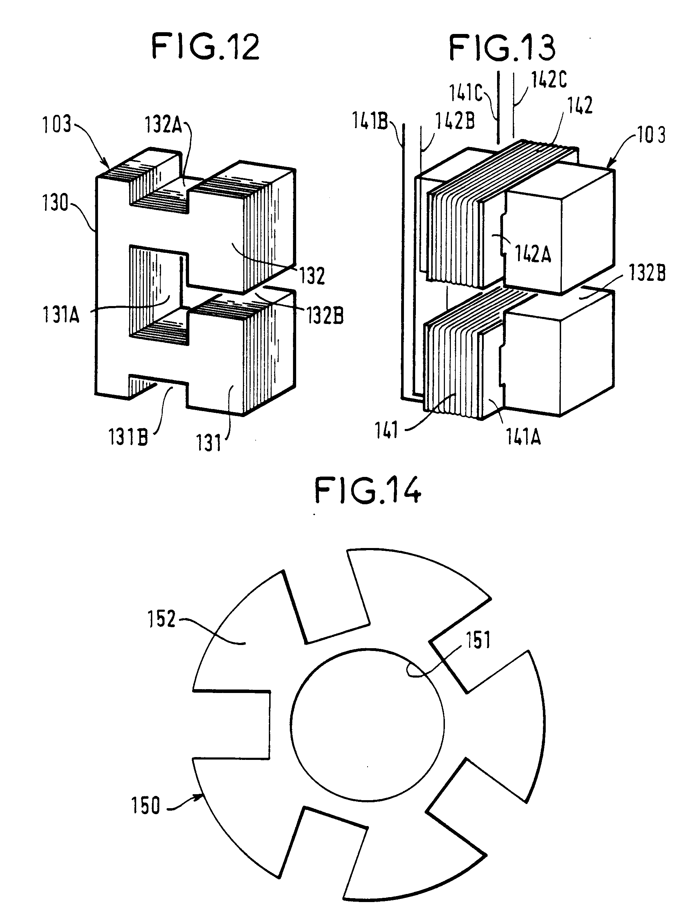

Le dispositif comprend un corps cylindrique 101 réalisé de préférence par moulage d'un alliage amagnétique léger, tel que celui connu sous la marque déposée zamak. Ce corps se présente sous la forme d'une paroi cylindrique 111 munie d'un fond 112 possédant un orifice circulaire 113 centré sur l'axe du cylindre. Des nervures radiales de renforcement 114 assurent la rigidité du corps. Des surépaisseurs 115, en forme de trapèzes à deux côtés curvilignes, définissent, avec des échancrures 116 pratiquées dans la paroi 111 parallèlement à l'axe du corps, des guidages pour le positionnement précis des circuits magnétiques décrits plus loin. La partie supérieure de la paroi 111 porte, venus de moulage, des tétons 117 pour le positionnement du circuit imprimé 60 décrit plus loin en référence à la figure 6. La paroi 111 comprend également, à sa partie supérieure, des fentes 18 pour le passage des fils électriques, comme on le verra plus en détail en référence à la figure 13.

La figure 12 représente en perspective l'un des circuits magnétiques du dispositif qui en comprend six, chaque circuit magnétique portant deux bobines. Le circuit est réalisé par un empilement de tôles magnétiques, selon une technique bien connue. Chaque tôle a la forme générale d'un U, ayant une base 130 de deux branches 131 et 132. Les branches possèdent des découpes de manière à constituer des rainures 131A, 131B, 132A et 132B dans lesquelles sont disposées les bobines 141 et 142 (figure 13). La bobine 141 est la bobine primaire et comprend une carcasse 141A en plastique injecté et un enroulement en fil de cuivre émaillé ; la bobine 142 est la bobine secondaire et comprend une carcasse 142A.

Les fils 141B, 141C, 142B et 142C d'amenée et de départ sont plaqués le long de la paroi 111 du corps 101. Les circuits magnétiques sont avantageusement collés à l'intérieur du corps, après leur mise en place dans les logements et le positionnement des fils de connexion.

La figure 14 est une vue en plan de l'élément mobile du dispositif, qui est un disque réalisé en alliage léger amagnétique. Ce disque comprend un trou central 151 pour le passage du moyeu et cinq dents 152 puisque le dispositif est destiné au contrôle d'une machine à cinq paires de pôles.

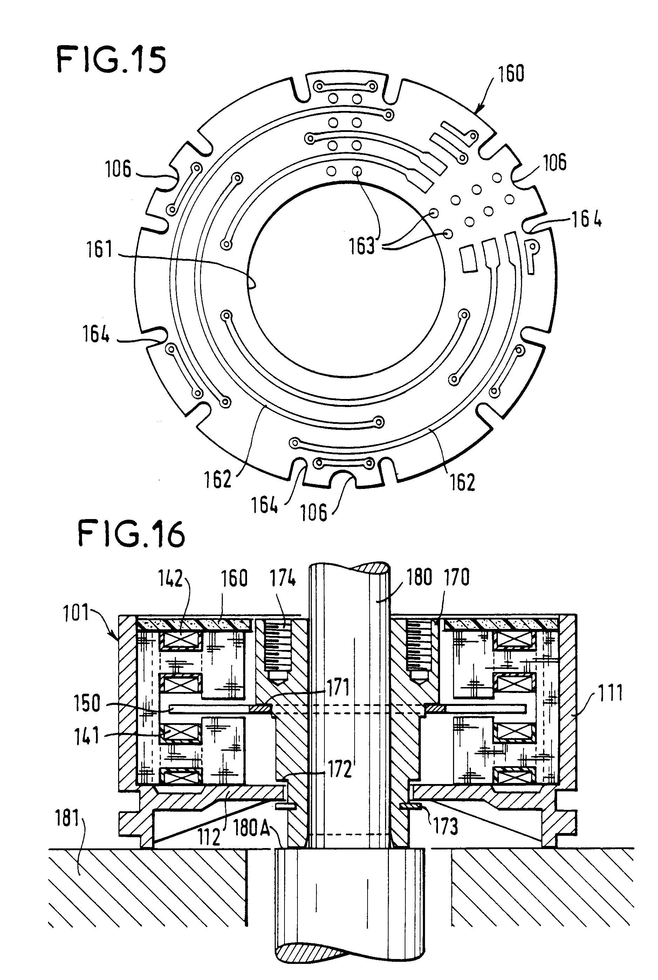

Le circuit imprimé 160, représenté dans la figure 15, comprend un alésage central 161 pour le passage de l'arbre du moteur ; il est réalisé de manière classique en résine sur laquelle sont déposées des pistes de cuivre 162 pour la réalisation des connexions. Des trous 163 et des encoches 64 permettent le passage des fils d'amenée et de départ de courant des bobines. Des encoches semi-circulaires 165 coopèrent avec des tétons 117 du corps pour un positionnement précis du circuit imprimé qui est alors serti sur le corps.

La figure 16 représente le dispositif complètement monté à l'extrémité de l'arbre 180 d'un moteur dont on aperçoit également le flasque d'extrémité 181 partiellement représenté.

Le dispositif de l'invention comprend un moyeu 170 réalisé de préférence par décolletage d'un matériau tel que celui connu sous le nom de dural, emmanché sur l'arbre 180 du moteur et venant se positionner avec exactitude par rapport à l'arbre du moteur, par exemple en venant en appui sur un épaulement 180A de l'arbre. Le moyeu se présente sous la forme d'un manchon cylindrique avec un premier épaulement 171 contre lequel s'appuie le disque 150 et qui est immobilisé par sertissage. Un second épaulement 172 coopère avec un circlips 173, de préférence en acier, pour protéger le disque contre les chocs axiaux, en venant emprisonner le bord circulaire du fond du corps.

Le corps 101 est positionné avec précision par appui et centrage contre le flasque d'extrémité du moteur.

On notera que le moyeu 170 comporte des alésages filetés 174 pratiqués dans son épaisseur parallèlement à l'axe du moyeu et destinés à l'insertion d'un appareil d'extraction qui permettra de désolidariser le moyeu 170 et l'arbre 180 lorsque cette opération s'avérera nécessaire.

Le dispositif de l'invention est de construction simple et peu onéreuse ; il permet un montage très facile sur tout type de machine à piloter. Il allie la robustesse à la précision.

L'invention n'est bien entendu pas limitée à l'exemple qui vient d'être décrit en détail ; elle s'applique à la mesure de la position angulaire de tout rotor par rapport à un stator, en particulier dans le domaine des machines électriques.

**Revendications**

1. Dispositif pour la mesure de l'angle de rotation d'un rotor par rapport à un stator, comprenant des capteurs magnétiques disposés selon une circonférence de manière fixe par rapport au stator, chaque capteur comprenant un circuit magnétique (4, 5) muni d'une bobine émettrice (6) et d'une bobine réceptrice (7), le circuit magnétique présentant un entrefer, le dispositif comprenant en outre un élément mobile (8) en un matériau amagnétique conducteur, solidaire du rotor (1) et muni de dents assujetties à défiler dans ledit entrefer des capteurs, les bobines émettrices étant toutes mises en série, caractérisé en ce qu'on prévoit n groupes de deux capteurs, les capteurs d'un même groupe étant décalés angulairement d'un angle 180°/m, m étant un nombre entier égal au nombre desdites dents, deux groupes voisins de capteurs étant angulairement espacés en évitant tout chevauchement des deux groupes, que les bobines émettrices sont alimentées par une tension alternative de fréquence entre 2 et 15 kHz, que les bobines réceptrices d'un même groupe de capteurs sont connectées en série, l'enveloppe des signaux aux bornes de ces circuits série des bobines réceptrices représentant, à un déphasage près, l'image de la mesure de l'angle de rotation du rotor.

2. Dispositif selon la revendication 1, caractérisé en ce que ledit rotor et ledit stator sont ceux d'une machine électrique à n phases et p paires de pôles, l'angle de décalage angulaire 180°/m de deux capteurs d'un même groupe correspondant à 180 degrés électriques soit 360/2p degrés d'angle.

3. Dispositif pour la mesure du déplacement d'une première pièce par rapport à une seconde pièce, comprenant des capteurs magnétiques solidaires de la première pièce et alignés de manière équidistante dans le long dudit déplacement, chaque capteur comprenant un circuit magnétique muni d'une bobine émettrice et d'une bobine réceptrice, ledit circuit magnétique présentant un entrefer, ledit dispositif comprenant en outre un élément en un matériau amagnétique conducteur, solidaire de la seconde pièce et muni de m dents alignées assujetties à défiler dans l'entrefer des capteurs, caractérisé en ce que le déplacement de la première pièce étant linéaire, les capteurs sont arrangés en groupes de deux, les capteurs d'un même groupe étant espacés d'une longueur L/2m, deux groupes voisins étant également espacés, L étant une longueur arbitraire et m un nombre entier, les bobines émettrices étant toutes mises en série et alimentées par une tension alternative de fréquence comprise entre 2 et 15 kHz, que les bobines réceptrices d'un même groupe sont connectées en série, l'enveloppe des signaux aux bornes de ces circuits série des bobines réceptrices représentant, à un déphasage près, l'image de la mesure du déplacement relatif des deux pièces.

4. Dispositif selon l'une des revendications 1 à 3, caractérisé en ce que le circuit magnétique est réalisé en deux parties identiques (4, 5) en forme de U, chacune d'elle portant l'une des bobines du capteur, les branches du U se faisant face pour définir l'entrefer.

5. Dispositif selon l'une des revendications 1 à 3, caractérisé en ce que le circuit magnétique (40) est en forme de C, l'entrefer étant délimité par les deux extrémités du circuit.

6. Dispositif selon l'une des revendications 1 à 5, caractérisé en ce que les dents de l'élément (8) sont en matériau conducteur amagnétique.

7. Dispositif pour la mesure de l'angle de rotation d'un rotor par rapport à un stator selon l'une des revendications 1 et 2, caractérisé en ce qu'il comprend un moyeu (170) destiné à être emmanché sur un arbre (180) dudit rotor et auquel est solidarisé un disque (150) muni d'au moins une dent (151) et un corps (101) comprenant une portion cylindrique (111) et un fond (112), disposé coaxialement audit moyeu et venant en appui contre une portion dudit stator, ledit corps comprenant des éléments (115, 116) pour positionner des circuits mangétiques (103) munis de bobines (141, 142), ledit dispositif comprenant un circuit imprimé (160) solidaire dudit corps et auquel aboutissent les fils de liaison desdites bobines.

8. Dispositif selon la revendication 7, caractérisé en ce que lesdits éléments de positionnement desdits circuits magnétiques comprennent des surépaisseurs (115) du fond (112) dudit corps (101).

9. Dispositif selon l'une des revendications 7 et 8, caractérisé en ce que lesdits éléments de positionnement desdits circuits magnétiques comprennent des échancrures (116) pratiquées dans la paroi parallèlement à l'axe du corps.

10. Dispositif selon l'une des revendications 7 à 9, caractérisé en ce que ledit corps comprend des nervures radiales (114) de renforcement.

11. Dispositif selon l'une des revendications 7 à 10, caractérisé en ce que le corps présente à sa périphérie des tétons (117) de positionnement pour un circuit imprimé (160).

12. Dispositif selon l'une des revendications 7 à 11, caractérisé en ce que ledit corps présente à sa périphérie des encoches (118) pour le passage de fils électriques.

13. Dispositif selon l'une des revendications 7 à 12, caractérisé en ce que ledit corps est réalisé par moulage en un matériau amagnétique léger.

14. Dispositif selon l'une des revendications 7 à 13, caractérisé en ce que lesdits circuits magnétiques (103) sont collés à l'intérieur du corps (101).

15. Dispositif selon l'une des revendications 7 à 14, caractérisé en ce que ledit circuit imprimé est serti sur ledit corps (101).

16. Dispositif selon l'une des revendications 7 à 15, caractérisé en ce que ledit moyeu (170) a la forme d'un manchon présentant un premier épaulement (171) contre lequel est serti ledit disque (150).

17. Dispositif selon l'une des revendications 7 à 16, caractérisé en ce que ledit moyeu (170) comprend un second épaulement (172) coopérant avec un circlips (173) pour protéger ledit disque contre les chocs axiaux.

18. Dispositif selon l'une des revendications 7 à 17, caractérisé en ce que ledit moyeu comprend des alésages (174) filetés parallèles à l'axe du moyeu, pratiqués dans son épaisseur, et destinés à la fixation d'un appareil d'extraction.

19. Dispositif selon l'une des revendications 7 à 18, caractérisé en ce que ledit moyeu est réalisé par décolletage.

## Claims

1. Device for measuring the rotation angle of a rotor relative to a stator comprising magnetic sensors disposed on a circumference fixed relative to the stator, each sensor comprising a magnetic circuit (4, 5) having a send coil (6) and a receive coil (7), the magnetic circuit having an airgap, the device further comprising a conductive amagnetic material mobile member (8) fastened to the rotor (1) and provided with teeth constrained to move in said airgap of the sensors, the send coils being all connected in series, characterised in that $n$ groups of two sensors are provided, the sensors of the same group being offset angularly by 180°/m where $m$ is an integer equal to the number of said teeth, two adjacent groups of sensors being angularly offset without any overlapping of the two groups, in that the send coils are fed with an alternating current at a frequency between 2 and 15 kHz, in that the receive coils of the same group of sensors are connected in series, the envelope of the signals across these series receive coil circuits representing, apart from a phase-shift, the measured rotation angle of the rotor.

2. Device according to claim 1 characterised in that said rotor and said stator are those of an electrical machine have $n$ phases and $p$ pole-pairs, the angular offset angle 180°/m of two sensors of the same group representing 180 electrical degrees or 360/2p degrees of angle.

3. Device for measuring the displacement of a first member relative to a second member comprising magnetic sensors fastened to the first member and aligned equidistantly lengthwise of said displacement, each sensor comprising a magnetic circuit having a send coil and a receive coil, said magnetic circuit having an airgap, said device further comprising a conductive amagnetic material member fastened to the second member and having $m$ aligned teeth constrained to move in the airgap of the sensors, characterised in that the displacement of the first member being linear, the sensors are arranged in pairs, the sensors of the same pair being spaced by a length L/2m, two adjacent groups being equally spaced, L being an arbitrary length and $m$ an integer, the send coils being all connected in series and fed with an alternating current at a frequency between 2 and 15 kHz, in that the receive coils of the same group are connected in series, the envelope of the signals across the series receive coil circuits representing, apart from a phase-shift, the measured relative displacement of the two members.

4. Device according to any one of claims 1 to 3 characterised in that the magnetic circuit is in two identical U-shaped parts (4, 5) each carrying one sensor coil, the branches of the U-shape facing each other to define the airgap.

5. Device according to any one of claims 1 to 3 characterised in that the magnetic circuit (40) is C-shape, the airgap being delimited by the two ends of the circuit.

6. Device according to any one of claims 1 to 5 characterised in that the teeth of the member (8) are made from an amagnetic conductive material.

7. Device for measuring the rotation angle of a rotor relative to a stator according to claim 1 or claim 2 characterised in that it comprises a hub (170) adapted to be sleeved onto a shaft (180) of said rotor and to which is fastened a disk (150) having at least one tooth (151) and a body (101) having a cylindrical portion (111) and a back (112), disposed coaxially to said hub and bearing against a portion of said stator, said body having members (115, 116) for locating magnetic circuits (103) having coils (141, 142), said device comprising a printed circuit (160) fastened to said body to which the connecting wires of said coils are connected.

8. Device according to claim 7 characterised in that said members for locating said magnetic circuits comprise additional thickness areas (115) of the back (112) of said body (101).

9. Device according to claim 7 or claim 8 characterised in that said members for locating said magnetic circuits comprise notches (116) in the wall parallel to the axis of the body.

10. Device according to any one of claims 7 to 9 characterised in that said body comprises radial reinforcing ribs (114).

11. Device according to any one of claims 7 to 10 characterised in that the body has lugs (117) at its periphery for locating a printed circuit (116).

12. Device according to any one of claims 7 to 11 characterised in that said body has notches (118) at its periphery for electrical wires to pass through.

13. Device according to any one of claims 7 to 12 characterised in that said body is cast from a lightweight amagnetic material.

14. Device according to any one of claims 7 to 13 characterised in that said magnetic circuits (103) are adhesively bonded to the interior of the body (101).

15. Device according to any one of claims 7 to 14 characterised in that said printed circuit is crimped to said body (101).

16. Device according to any one of claims 7 to 15 characterised in that said hub (170) is in the form of a sleeve having a first shoulder (171) against which said disk (150) is crimped.

17. Device according to any one of claims 7 to 16 characterised in that said hub (170) comprises a second shoulder (172) cooperating with a circlip (173) to protect said disk against axial impact.

18. Device according to any one of claims 7 to 17 characterised in that said hub comprises threaded bores (174) parallel to the axis of the hub for fixing an extractor device.

19. Device according to any one of claims 7 to 18 characterised in that said hub is a turned component.

**Patentansprüche**

1. Einrichtung zur Messung des Drehwinkels eines Rotors relativ zu einem Stator, mit magnetischen Meßfühlern, die entlang eines Umfanges relativ zum Stator fest angeordnet sind, wobei jeder Meßfühler einen magnetischen Kreis (4, 5) mit einer Sendespule (6) und einer Empfangsspule (7) aufweist und der magnetische Kreis einen Luftspalt besitzt, wobei die Einrichtung weiter ein bewegliches Element (8) aus einem leitenden, nicht magnetischen Material umfaßt, das mit dem Rotor (1) fest verbunden und mit Zähnen versehen ist, die den Luftspalt der Meßfühler durchlaufen, wobei die Sendespulen sämtlich in Reihe geschaltet sind, dadurch gekennzeichnet, daß n Gruppen zu je zwei Meßfühlern vorgesehen sind, wobei die Meßfühler einer Gruppe winkelmäßig um 180°/m gegeneinander versetzt sind, wobei m eine ganze Zahl entsprechend der Anzahl der Zähne ist und zwei benachbarte Gruppen von Meßfühlern zur Vermeidung einer Überlappung der beiden Gruppen einen Winkelabstand besitzen; daß die Sendespulen mit einer Wechselspannung einer Frequenz zwischen 2 und 15 kHz gespeist werden; daß die Empfangsspulen einer Meßfühlergruppe in Reihe geschaltet sind, wobei die Einhüllende der Signale an den Klemmen der Reihenschaltung dieser Empfangsspulen, bis auf eine Phasenverschiebung, das Abbild der Messung des Drehwinkels des Rotors darstellt.

2. Einrichtung nach Anspruch 1, dadurch gekennzeichnet, daß der Rotor und der Stator einer elektrischen Maschine mit n Phasen und p Polpaaren angehören, wobei der Winkel der Winkelverschiebung 180°/m zwischen zwei Meßfühlern derselben Gruppe einem elektrischen Winkel von 180° bzw. 360/2p Winkelgraden entspricht.

3. Einrichtung zur Messung der Verschiebung eines ersten Bauteils relativ zu einem zweiten Bauteil, mit magnetischen Meßfühlern, die fest mit dem ersten Teil verbunden und in gleichen Abständen entlang der Verschiebung fluchtend angeordnet sind, wobei jeder Meßfühler einen magnetischen Kreis mit einer Sendespule und einer Empfangsspule aufweist und der magnetische Kreis einen Luftspalt besitzt, wobei die Einrichtung weiter ein Element aus leitendem, nicht magnetischem Material umfaßt, das mit dem zweiten Teil fest verbunden und mit m hintereinander angeordneten Zähnen versehen ist, die den Luftspalt der Meßfühler durchlaufen, dadurch gekennzeichnet, daß bei einer linearen Verschiebung des ersten Bauteils die Meßfühler in Gruppen zu zweit angeordnet sind, wobei die Meßfühler einer Gruppe einen Abstand einer Länge L/2m aufweisen und zwei benachbarte Gruppen ebenfalls im Abstand zueinander stehen, wobei L eine willkürliche Länge und m eine ganze Zahl ist, und wobei die Sendespulen sämtlich in Reihe geschaltet und durch eine Wechselspannung mit einer Frequenz zwischen 2 und 15 kHz gespeist werden; daß die Empfangsspulen einer Gruppe in Reihe geschaltet sind und die Einhüllende der Signale an den Klemmen dieser Serienschaltungen der Empfangsspulen, bis auf eine Phasenverschiebung, das Abbild des Maßes der Relativverschiebung der beiden Teile darstellt.

4. Einrichtung nach einem der Ansprüche 1 bis 3, dadurch gekennzeichnet, daß der magnetische Kreis aus zwei identischen Abschnitten (4, 5) in U-Form aufgebaut ist, wobei jeder der Abschnitte eine der Spulen des Meßfühlers trägt und die Schenkel des U einander gegenüberstehen und den Luftspalt definieren.

5. Einrichtung nach einem der Ansprüche 1 bis 3, dadurch gekennzeichnet, daß der magnetische Kreis (40) die Form eines C besitzt und der Luftspalt durch die beiden Enden des Kreises begrenzt ist.

6. Einrichtung nach einem der Ansprüche 1 bis 5, dadurch gekennzeichnet, daß die Zähne des Elementes (8) aus nichtmagnetischen, leitendem Material besteht.

7. Einrichtung zur Messung des Drehwinkels eines Rotors relativ zu einem Stator nach einem der Ansprüche 1 und 2, dadurch gekennzeichnet, daß sie eine Nabe (170), die zum Aufschieben auf eine Welle (180) des Rotors bestimmt ist und mit der eine Scheibe (150) fest verbunden ist, die mit mindestens einem Zahn (151) versehen ist, und einen Körper (101) aufweist, der einen zylindrischen Abschnitt (111) und einen Boden (112) umfaßt, koaxial zur Nabe angeordnet ist und gegen einen Abschnitt des Stators anliegt, wobei der Körper Elemente (115, 116) zum Positionieren der mit Spulen (141, 142) versehenen magnetischen Kreise aufweist und die Einrichtung eine gedruckte Schaltung (160) aufweist, die fest mit dem Körper verbunden ist und an der die Anschlußleitungen der Spulen enden.

8. Einrichtung nach Anspruch 7, dadurch gekennzeichnet, daß die Positionierungselemente der magnetischen Kreise Verdickungen (115) des Bodens (112) des Körpers (101) aufweisen.

9. Einrichtung gemäß einem der Ansprüche 7 und 8, dadurch gekennzeichnet, daß die Positionierungselemente der magnetischen Kreise Aussparungen (116) aufweisen, die parallel zur Achse des Körpers in die Wand eingearbeitet sind.

10. Einrichtung nach einem der Ansprüche 7 bis 9, dadurch gekennzeichnet, daß der Körper radiale Verstärkungsrippen (114) aufweist.

11. Einrichtung gemäß einem der Ansprüche 7 bis 10, dadurch gekennzeichnet, daß der Körper an seinem Umfang Positionierungsstifte (117) für eine gedruckte Schaltung (160) aufweist.

12. Einrichtung nach einem der Ansprüche 7 bis 11, dadurch gekennzeichnet, daß der Körper an seiner Peripherie Ausschnitte (118) für den Durchlaß der elektrischen Drähte besitzt.

13. Einrichtung nach einem der Ansprüche 7 bis 12, dadurch gekennzeichnet, daß der Körper durch Gießen aus einem leichten unmagnetischen Material hergestellt ist.

14. Einrichtung nach einem der Ansprüche 7 bis 13, dadurch gekennzeichnet, daß die magnetischen Kreise (103) im Inneren des Körpers (101) festgeklebt sind.

15. Einrichtung nach einem der Ansprüche 7 bis 14, dadurch gekennzeichnet, daß die gedruckte Schaltung auf dem Körper (101) festgespannt ist.

16. Einrichtung nach einem der Ansprüche 7 bis 15, dadurch gekennzeichnet, daß die Nabe (170) die Form einer Hülse mit einer ersten Schulter (171) besitzt, gegen die die Scheibe (150) festgespannt ist.

17. Einrichtung nach einem der Ansprüche 7 bis 16, dadurch gekennzeichnet, daß die Nabe (170) eine zweite Schulter (172) aufweist, die mit einem Klemmring (173) zusammenwirkt, um die Scheibe gegen axiale Stöße zu schützen.

18. Einrichtung nach einem der Ansprüche 7 bis 17, dadurch gekennzeichnet, daß die Nabe Gewindebohrungen (174) aufweist, die parallel zur Achse der Nabe verlaufen, dabei in ihre Wandungsdicke eingearbeitet sind und zur Fixierung eines Abziehgerätes bestimmt sind.

19. Einrichtung gemäß einem der Ansprüche 7 bis 18, dadurch gekennzeichnet, daß die Nabe durch spanende Bearbeitung hergestellt ist.

# FIG.1

# FIG.2

# FIG.3

# FIG.4

# FIG.5

FIG.6

FIG.7A

FIG.7B

# FIG.8

# FIG.9

## FIG.10

## FIG.11

# FIG.12

# FIG.13

# FIG.14

FIG.15

FIG.16